# FASCICULE DE BREVET EUROPEEN

(11) **EP 2 408 792 B1**
(45) Date de publication et mention de la délivrance du brevet: **20.08.2014**
(21) Numéro de dépôt: 10712459.6
(22) Date de dépôt: 16.03.2010
(51) Int. Cl.: C07F 17/02, H01L 21/30

(54) **NOUVELLES MOLECULES BIFONCTIONNELLES MUNIES D'UN GROUPEMENT CYCLOALCYNE OU HETEROCYCLOALCYNE ET D'UN GROUPEMENT REDOX**
NEUE BIFUNKTIONELLE MOLEKÜLE, DIE EINE CYCLOALKIN- ODER HETEROCYCLOALKINGRUPPE UND EINE REDOXGRUPPE ENTHALTEN
NOVEL BIFUNCTIONAL MOLECULES COMPRISING A CYCLOALKYNE OR HETEROCYCLOALKYNE GROUP AND A REDOX GROUP

(30) Priorité: 18.03.2009 FR 0901256
(43) Date de publication de la demande: 25.01.2012
(73) Titulaire: Commissariat à l'Énergie Atomique et aux Énergies Alternatives, 75015 Paris (FR)
(72) Inventeur: DELAPIERRE, Guillaume, F-38450 Vif (FR); BARATTIN, Régis, F-38000 Grenoble (FR); BERNARDIN, Aude, F-45740 Lailly-en-Val (FR); TEXIER-NOGUES, Isabelle, F-38000 Grenoble (FR)
(74) Mandataire: Noel, Chantal Odile
(86) Numéro de dépôt international: PCT/FR2010/000221
(87) Numéro de publication internationale: WO 2010/106245

(56) Documents cités:
- WO-A2-2005/086826

## Description

L'invention concerne des composés comprenant un groupement cycloalcyne ou hétérocycloalcyne et un groupement redox.

Elle concerne également l'utilisation de ces composés pour fonctionnaliser un substrat en un matériau inorganique, ainsi qu'un système hybride de mémoire moléculaire comprenant un tel substrat.

La fonctionnalisation d'un substrat inorganique par des molécules organiques rencontre un intérêt de plus en plus important dans de nombreux domaines techniques.

En particulier, dans le domaine de l'électronique moléculaire, la recherche s'oriente de plus en plus vers des composés pour fonctionnaliser des substrats semi-conducteurs, en particulier en silicium et en germanium.

Il existe dans ce domaine une demande particulière pour des substrats pour système hybride de mémoire moléculaire.

On a déjà proposé d'utiliser des molécules redox présentant une fonction alcyne utilisée pour fonctionnaliser des substrats semi-conducteurs et développer des systèmes hybrides de mémoire moléculaire (Travaux de D. Bocian & coll. : J. Org. Chem., 2006, 71, 1156-1171. ; Brevet WO 2005/086826 A2).

Ce type de dispositif de mémoire moléculaire utilise les propriétés des molécules redox pour stocker l'information.

Plus précisément, l'écriture des données s'effectue lors de l'oxydation de la molécule redox et l'effacement des données s'effectue lors de la réaction de réduction de la molécule redox.

L'invention vise à fournir de nouveaux composés comportant deux fonctionnalités, l'une d'entre elles étant constituée par un groupement (une molécule) ayant des propriétés redox et l'autre étant une fonctionnalité alcyne.

A cet effet, l'invention propose des composés de formule générale I suivante : 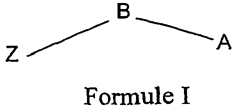 dans laquelle
- Z est un cycloalcyne ou un hétérocycloalcyne à au moins 8 chaînons, éventuellement substitué par un atome d'halogène ou un alkyle en C₁ à C₅ linéaire ou ramifié,
- A est une structure organique possédant des propriétés oxydo-réductrices,
- B est un lien organique entre le cycloalcyne ou l'hétérocycloalcyne et la structure organique A.

De préférence, Z est un cycloalcyne ou un hétérocycloalcyne non substitué ayant entre 8 à 12, inclus, chaînons.

Par "8 à 12 chaînons" on entend, dans l'invention, un cycle comportant entre 8 et 12 atomes, qui sont des atomes de carbone dans le cycloalcyne et 8 à 12 atomes de carbone d'hétéroatomes tels que O, N et S, dans l'hétérocycloalcyne.

Les atomes du substituant, lorsque présent, ne sont pas pris en compte pour le calcul des chaînons.

Le plus préférablement, Z est un cyclooctyne non substitué.

La structure organique A possède des propriétés oxydo-réductrices. Par propriétés oxydo-réductrices, on entend, dans l'invention, qu'une molécule organique est dite redox lorsqu'elle est capable de perdre ou gagner des électrons de manière réversible et de rester stable dans les états neutres et chargés correspondants. Pris dans le contexte des mémoires moléculaires, où l'apport et la perte d'électrons se fait par l'intermédiaire d'une tension électrique, cette définition exclut toute fonction organique que l'on peut réduire ou oxyder chimiquement.

De préférence, dans les composés de l'invention, A est choisi parmi une molécule de ferrocène, une molécule de porphyrine, une molécule d'anthracène, une molécule de naphtalène, une molécule de fullerène, une molécule de polyoxométallate.

Egalement de préférence, dans les composés de l'invention, B est choisi parmi un alkyle en C₁ à C₃₀ inclus de 1 à 30 carbones, linéaire ou ramifié, saturé ou insaturé comportant éventuellement des hétéroatomes et/ou des fonctions amides et/ou esters ; un aryle à 5 à 6 carbones ; et un hétéroaryle à 5 à 6 carbones.

Toujours de préférence, dans les composés de l'invention, le substituant "-B-A" est en position α de la triple liaison du cycle cycloalcyne ou hétérocycloalcyne.

Un composé particulièrement préféré dans l'invention a la formule I - A suivante :

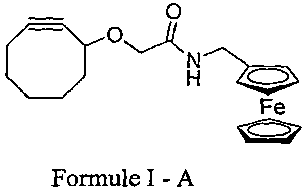

Un autre composé particulièrement préféré de l'invention est le composé de formule I - B suivant :

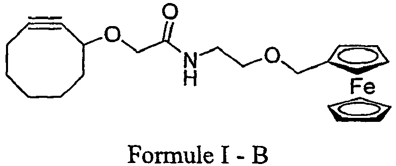

L'invention propose encore l'utilisation d'au moins un composé de formule I selon l'invention pour la fonctionnalisation d'un substrat inorganique.

De préférence, le substrat est en un matériau semi-conducteur.

Plus préférablement, le substrat est en silicium.

L'invention propose aussi un système hybride de mémoire moléculaire caractérisé en ce qu'il comprend un substrat semi-conducteur fonctionnalisé avec au moins un composé de formule générale I selon l'invention.

Selon l'invention, on a fonctionnalisé la surface de silicium ou de germanium du système avec des molécules à propriétés redox. La fonctionnalisation se fait par l'intermédiaire de la fonction alcyne qui réagit avec le substrat hydrogéné suivant une réaction d'hydrosilylation. Le système obtenu présente alors une couche de molécules redox à sa surface. Les différents états redox disponibles sont alors utilisés pour stocker l'information sur la surface, en faisant varier la tension appliquée au système : en appliquant une tension correspondant au potentiel d'oxydation des molécules greffées, la surface devient chargée (écriture des données) ; en revenant à l'état initial (réduction), la surface redevient neutre (effacement des données).

L'invention sera mieux comprise et d'autres caractéristiques et avantages de celle-ci apparaîtront plus clairement à la lecture de la description explicative qui suit.

Les nouveaux composés de l'invention comportent deux groupements d'intérêts :
- un groupement, noté Z, composé d'une partie cycloalcyne ou hétérocycloalcyne, qui va permettre de lier le composé à la surface d'un substrat inorganique, en particulier semi-conducteur, de préférence en silicium, par couplage du (hétéro)cycloalcyne, soit, par exemple, avec un groupement azido (N₃) créé sur le substrat, soit par cyclisation 1,3-dipolaire (de Huisgen), ou encore par greffage direct du cycloalcyne sur une surface non oxydée du substrat par hydrosilylation, et
- un groupement, noté A, ayant des propriétés redox.

Dans les composés de l'invention, ces deux groupements sont reliés par un bras espaceur, noté B.

Le groupement Z peut être un cycloalcyne ou un hétérocycloalcyne à au moins 8 chaînons, de préférence ayant entre 8 et 12 chaînons, et est éventuellement substitué par un halogène tel que F, Cl, Br et I ou par un alkyle en C₁ à C₅, linéaire ou ramifié.

De préférence, Z est un cycloalcyne ou un hétérocycloalcyne non substitué.

Le plus préférablement, Z est un cyclooctyne.

La molécule redox (le groupement A) est une molécule capable de capter ou donner un ou plusieurs électrons.

A titre d'exemples, on peut citer le ferrocène, les porphyrines, l'anthracène, le naphtalène, les fullerènes, les polyoxometallates.

On préfère tout particulièrement le ferrocène.

Quant au groupement B, c'est un lien organique entre le cyclooctyne et la structure redox A.

Ce lien organique peut être une chaîne alkyle en C₁ à C₃₀ inclus, linéaire ou ramifiée, saturée ou insaturée, comportant éventuellement des hétéroatomes, plus particulièrement des atomes d'oxygène ou d'azote et/ou des fonctions amides et/ou esters. Ce lien organique peut également être un aryle en C₅ à C₆ ou un hétéroaryle en C₅ à C₆.

Ce lien organique peut être attaché en n'importe quelle position sur le cycle cyclooctyne.

Cependant, de préférence il sera attaché en α de la triple liaison du cycle cyclooctyne.

Un composé tout préféré selon l'invention est un composé de formule I - A suivante :

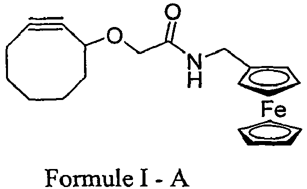

Un autre composé selon l'invention est un composé de formule I - B suivante :

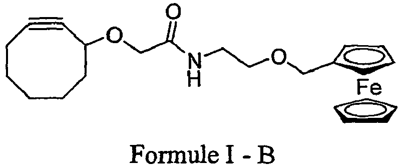

Les composés de l'invention peuvent être utilisés pour la fonctionnalisation d'un substrat en un matériau organique et, plus particulièrement d'un substrat en un matériau semi-conducteur, en particulier en silicium ou en germanium.

De préférence, le substrat est en silicium.

Ce substrat peut alors être utilisé dans un système hybride de mémoire moléculaire.

Ainsi, le système hybride de mémoire moléculaire selon l'invention comprend un substrat en un matériau semi-conducteur, de préférence en silicium, fonctionnalisé par des composés de formule générale I.

La fonctionnalisation du substrat peut se faire, en particulier, soit par couplage du (hétéro)cycloalcyne, de préférence un cyclooctyne, avec un groupement azido (N₃), soit par cyclisation 1,3-dipolaire, c'est-à-dire par une réaction de Huisgen.

Dans le cas d'un couplage avec un groupement azido, un groupement azido est d'abord lié à la surface du substrat de silicium. Ce groupement azido réagira ensuite avec la triple liaison du cycle (hétéro)cycloalcyne, de préférence un cyclooctyne, selon le schéma 1 suivant :

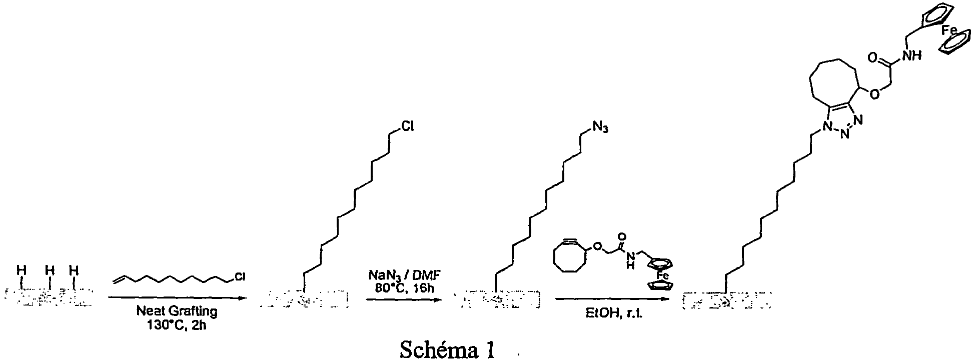

La fonctionnalisation du substrat pourra également s'effectuer par greffage direct du (hétéro)cycloalcyne, de préférence un cyclooctyne, sur une surface de silicium non oxydée par hydrosilylation.

Afin de mieux faire comprendre l'invention, on va maintenant en décrire, à titre d'exemples purement illustratifs et non limitatifs des exemples de mise en oeuvre.

### Exemple 1 : Synthèse du composé de formule I - A

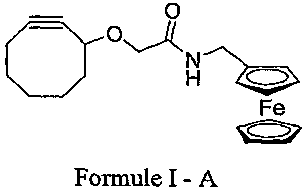

### 1. Synthèse du 8,8-dibromobicyclo[5.1.0]octane

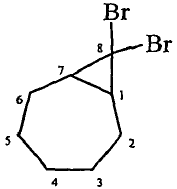

Dans un ballon sec, et sous argon, sont introduits 3,65 g de cycloheptène (soit 38 mmol) puis 8,52 g de t-BuOK (soit 76 mmol, 2 éq.) et 9 mL de pentane distillé au préalable. La solution jaune crème obtenue est agitée vigoureusement et placée dans un bain glace/sel. Puis 4,9 mL de bromoforme (soit 57 mmol, 1,5 éq.) sont ajoutés goutte à goutte. Lors des premiers ajouts, un dégagement gazeux assez violent est observé, puis au fur et à mesure de l'addition la solution devient ocre brune. Au cours de l'addition, environ 5 mL de pentane ont été rajoutés pour permettre une agitation correcte de la solution. Une fois l'addition terminée, le mélange est laissé revenir à température ambiante toute la nuit, sous argon et agitation vigoureuse.

Environ 50 mL d'eau sont ensuite ajoutés et le pH neutralisé avec HCl 1M. Les phases organique et aqueuse sont séparées ; la phase aqueuse est extraite avec 3x20 mL de pentane et la phase pentane est lavée avec 3x20 mL d'eau. La phase organique est ensuite séchée sur MgSO₄ et le solvant évaporé sous vide. Une huile jaune orangée est obtenue avec une masse m = 10,814 g.

Le produit est ensuite purifié par une simple filtration sur silice avec comme éluant cyclohexane/AcOEt 5%. Une huile incolore de masse totale 9,100 g est obtenue après purification, soit avec un rendement de 90 % (litt. 52-65% pour le 9,9-dibromobicyclo[6.1.0]nonane).
R_{f} (cyclohexane 95/ AcOEt 5) = 0,85 ;
RMN ¹H (CDCl₃, 200 MHz) : δ (ppm) 1,05-1,22 (m, 3H) ; 1,34 (qq, J = 1-7,5 Hz, 2H) ; 1,68 (ddd, J = 1,5-4-10,5 Hz, 2H) ; 1,76-1,92 (m, 3H) ; 2,23 (dtq, J = 14-6-1 Hz, 2H) ;
RMN ¹³C (CDCl₃, 50 MHz) : δ (ppm) 40,7 (C₈ quat.); 34,8 (2, C₁₋₇) ; 32,2 (C₄) ; 28,9 (2, C₂₋₆) ; 27,9 (2, C₃-₅) ;
Masse : ESI⁺ m/z [M+H₂O+H]⁺ = 284,4 pour 284,9 ; [M+HBr+Na]⁺ = 368,5 pour 369,93
IR : ν (cm⁻¹) 2921 ν_{CH} ; 2853 ν_{CH2} ; 1457 δ_{CH} ; 1354 δ_{CH tertiaire} ; 735 V_{CBr} ;

### 2. Synthèse du 2-bromo-cyclooctèn-3-glycolate de méthyle

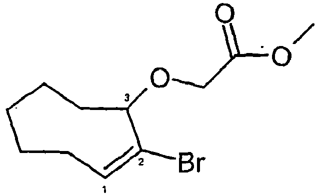

A une solution de 8,8-dibromobicyclo[5.1.0]octane (2,5 g soit 9,3 mmol) et de glycolate de méthyle (6,35 mL soit 83,9 mmol) dissous dans 5 mL de toluène anhydre dans un ballon sec, sous Ar et protégé de la lumière par un film d'aluminium, sont ajoutés 3,85 g de perchlorate d'argent (soit 18,6 mmol). La réaction est agitée pendant 1 h 30 à température ambiante, puis les sels d'argent sont filtrés sur fritté et lavés avec AcOEt. La solution est concentrée sous vide pour donnée une huile visqueuse brune qui est purifiée par chromatographie sur gel de silice (2-15% AcOEt dans le cyclohexane) pour obtenir le produit sous forme d'huile jaune de masse m= 1,6 g, soit 65 % de rendement.
R_{f} (éther de pétrole/AcOEt 5%) = 0,25 ;
RMN ¹H (CDCl₃, 200 MHz) : δ (ppm) 0,7-2,2 (m, 8H) ; 2,28 (m, 1H) ; 2,70 (ddd, J= 5- 11,5-23,5 Hz, 1H) ; 3,72 (s, 3H, OMe) ; 3,94 (d, J_{9-9'}= 16,5 Hz, 1H, H₉) ; 4,10 (dd, J₃₋₄ = 5 Hz, J₃₋₄- = 10 Hz, 1H, H₃) ; 4,23 (d, J_{9-9'} = 16,5 Hz, 1H, H_{9'}) ; 6,20 (dd, J₁₋₈ = 4 Hz, J₁₋₈, = 11,5 Hz, 1H, H₁) ;
RMN ¹³C (CDCl₃, 50 MHz) : 26,2 ; 28,0 ; 33,4 ; 36,5 ; 39,3 (C₄₋₈); 51,8 (C₃) ; 65,4 (C₁₁) ; 84,8 (C₉) ; 131,4 (C₂ quat.) ; 133 (C₁) ; 170,7 (C₁₀ quat.) ;
Masse : ESI⁺ m/z [M+H]+ = 277,6-279,6 ; [M+Na]+ = 299,6-306,1 ; [2M+H]+ = 553,0-555,0-557,0 ; [2M+Na]+ = 575,0-576,9-578,8;
IR : ν(cm⁻¹) 2931 ν_{CH} ; 2856 ν_{CH2} ; 1754 ν_{C=O} ; 1445 ν_{C=C trans} ; 1132 ν_{COC éther}

### 3. Synthèse de l'acide cyclooct-1-yn-3-glycolique

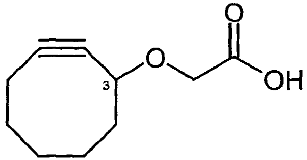

A 250 mg de 2-bromo-cyclooctèn-3-glycolate de méthyle (soit 0,90 mmol) est ajoutée une solution de méthylate de sodium à 0,5M dans le méthanol. Le mélange est agité pendant 2 jours à température.

La réaction est acidifiée avec HCl 1M puis extraite avec AcOEt, séchée sur MgSO₄ et les solvants sont évaporés. Le produit est purifié sur gel de silice avec AcOEt et est obtenu sous forme d'huile jaune de masse 120 mg, soit 80% de rendement.
RMN ¹H (CDCl₃, 200 MHz) : δ(ppm) 1,3-2,3 (m, 10H) ; 4,45 (d, J_{9-9'} = 17 Hz, 1H, H₉) ; 4,50 (m, 1H, H₃) ; 4,58 (d, J_{9-9'} = 17 Hz, 1H, H_{9'}) ;
RMN ¹³C (CDCl₃, 50 MHz) : δ(ppm)
Masse : ESI⁺ m/z

### 4. Synthèse du ferrocène-cyclooctyne de formule I - A :

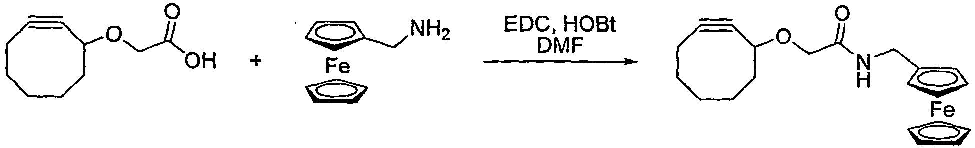

A une solution de l'acide cyclooct-1-yn-3-glycolique (33 mg soit 0,18 mmol) dans 2mL de DMF anhydre sont ajoutés 41 mg d'EDC (soit 0,21 mmol) et 28 mg d'HOBt (soit 0,21 mmol). Après agitation à température ambiante sous argon pendant 15 min, une solution de ferrocène-méthylamine (45 mg soit 0,21 mmol) dans 0,8 mL de DMF anhydre est agitée goutte à goutte. L'agitation est maintenue pendant 24h.

Après addition de 10 mL d'eau, le mélange réactionnel est extrait au dichlorométhane. La phase organique est séchée sur Na2SO4 anhydre, filtrée et concentrée sous vide. Le produit est purifié sur gel de silice (DCM/MeOH : 99/1) et est obtenu sous forme d'une huile jaune (21 mg soit 30% de rendement).

Le composé de formule I - A a été mis en solution, son activité redox a été testée par voltamétrie cyclique en utilisant un système à trois électrodes.

L'électrode de travail est une électrode de platine, l'électrode de référence est une électrode à calomel saturé et la contre-électrode est une électrode de platine.

L'électrolyte utilisé est une solution à 1M de Bu₄NPF₆ dans le carbonate de propylène.

La mesure de voltamétrie cyclique a été effectuée à une vitesse de balayage de 500 mV/s.

On identifie un pic d'oxydation à 0,5V et un pic de réduction à 0,35V.

On vérifie ainsi que la modification du ferrocène par le cyclooctyne ne détruit pas l'activité redox du ferrocène.

### Exemple 2 : Fonctionnalisation d'une surface de silicium avec le composé de formule I - A

Une surface de silicium comportant une fonction azido (N₃) a été préparée en 2 étapes à partir d'une surface de silicium hydrogénée.

Puis une réaction de cyclisation 1-3 dipolaire (réaction de Huisgen) entre cette fonction azido et le composé de formule I - A a permis d'immobiliser la structure ferrocène sur un substrat en silicium.

Plus précisément, on a effectué les trois étapes suivantes :
1- Hydrosilylation par neat grafting du 11-chloroundec-1-ène :
   Dans un tube scellé, une surface de silicium préalablement hydrogénée par traitement au HF 1% est recouverte de 0,5 mL de 11-chloroundec-1-ène. Le milieu réactionnel est chauffé à 130°C pendant 2h par immersion dans un bain de graphite. Après refroidissement à température ambiante, la surface est lavée et soniquée successivement dans l'acétone, l'éthanol et le dichlorométhane.
2- Formation de la surface azido :
   La surface chlorée précédemment synthétisée est introduite dans une solution saturée de NaN₃ (0,25 g) dans le DMF (20 mL). Le milieu réactionnel est chauffé à 80°C pendant 16h sous argon. Après refroidissement à température ambiante, la surface est lavée et soniquée successivement dans l'eau, l'acétone, l'éthanol et le dichlorométhane.
3- Couplage du cyclooctyne-ferrocène :
   La surface azido précédemment préparée est introduite dans une solution à 1mM de cyclooctyne-ferrocène dans l'éthanol. Le milieu réactionnel est agité à température ambiante sous atmosphère d'argon pendant 24 h. La surface est alors lavée et soniquée dans le dichlorométhane et séchée sous argon.

L'activité redox du composé de formule I - A sur cette surface a été vérifiée par voltamétrie cyclique.

Les mesures de voltamétrie cyclique ont été effectuées en utilisant un système à trois électrodes : l'électrode de travail est le substrat de silicium fonctionnalisé avec le composé de formule I - A, l'électrode de référence est une électrode à calomel saturé et la contre-électrode est une électrode de platine. L'électrolyte utilisé est une solution à 1M de Bu₄NPF₆ dans le carbonate de propylène. Les mesures de voltamétrie cyclique ont été effectuées à des vitesses de balayage variant de 50 mV/s à 750 mV/s.

Le ΔE(ox/red) est assez important, d'environ 0,8V, en raison de la longueur de l'espaceur entre la molécule redox et la surface semi-conductrice de silicium.

### Exemple 3 : Fonctionnalisation d'un support en silicium avec le composé de formule I - A

Dans cet exemple, il est démontré qu'il est possible de greffer directement le composé de formule I - A par chauffage sur une surface de silicium hydrogénée.

Ainsi, le composé de formule I - A a été greffé directement sur une surface de silicium hydrogénée de la façon suivante.

Une surface de silicium préalablement hydrogénée par traitement au HF 1% est introduite dans une solution à 1mM de cyclooctyne-ferrocène dans le mésitylène. Le milieu réactionnel est chauffée (100°C / 130°C / 180°C) sous atmosphère d'argon pendant 2 h. Après refroidissement à température ambiante, la surface est lavée et soniquée dans le dichlorométhane et séchée sous argon.

Les trois substrats obtenus ont été soumis à des mesures de voltamérie cyclique.

Les mesures de voltamétrie cyclique ont été effectuées en utilisant un système à trois électrodes : l'électrode de travail est le substrat de silicium étudié, l'électrode de référence est une électrode à calomel saturé et la contre-électrode est une électrode de platine. L'électrolyte utilisé est une solution à 1M de Bu₄NPF₆ dans le carbonate de propylène. Les mesures de voltamétrie cyclique ont été effectuées à des vitesses de balayage variant de 10 mV/s à 1000 mV/s.

On constate que dès que le greffage a lieu à 130 °C, on obtient un greffage efficace de la molécule qui permet d'observer l'activité redox du ferrocène sur la surface de silicium.

A 130 °C, et à une vitesse de balayage de 10 mV/s, le ΔE est de 109 mV.

A une vitesse de balayage de 20 mV/s, le ΔE est de 119 mV.

Et à une vitesse de balayage de 500 mV/s, le ΔE est de 317 mV.

La densité de greffage, c'est-à-dire le nombre de molécules redox par unité de surface, a été évaluée par électrochimie à 7,8.10⁻¹¹ molécules.cm⁻² (à une vitesse de balayage de 500 mV/s).

Quant au greffage effectué à 180 °C, la mesure de voltamétrie cyclique à une vitesse de balayage de 10 mV/s montre que le ΔE(ox/red) est de 59 mV.

A une vitesse de balayage de 20 mV/s, le ΔE(ox/red) est de 59 mV.

A une vitesse de balayage de 100 mV/s, le ΔE(ox/red) est de 129 mV.

Et à une vitesse de balayage de 500 mV/s, le ΔE(ox/red) est de 228 mV.

Dans ce cas là, la densité de greffage a été évaluée par électrochimie à 2,3.10⁻¹¹ molécules.cm⁻² (à une vitesse de balayage de 500 mV/s).

Les valeurs des ΔE(ox/red) et des densités de greffage pour les greffages effectués à 130 °C et 180 °C montrent que le greffage à 180°C est plus efficace. En effet, la densité de greffage est augmentée d'un facteur 3 et le faible écart entre le potentiel d'oxydation et le potentiel de réduction est plus faible, signe d'une réoxydation moins importante du substrat donc d'un meilleur greffage. Toutefois, il faut noter qu'il n'est pas nécessaire d'effectuer une activation à si haute température, puisque le greffage peut tout de même être réalisé à 130°C.

### Exemple 4 : Synthèse du composé de formule I - B

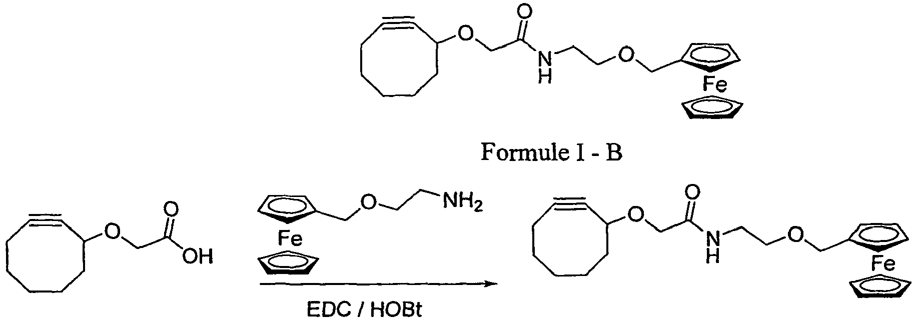

A une solution de l'acide cyclooct-1-yn-3-glycolique (34 mg soit 0,19 mmol) dans 2mL de DMF anhydre sont ajoutés 41 mg d'EDC (soit 0,21 mmol) et 28 mg d'HOBt (soit 0,21 mmol). Après agitation à température ambiante sous argon pendant 15 min, le 2-aminoethyl-ferrocenyl méthyléther (70 mg soit 0,21 mmol) est ajouté. L'agitation est maintenue pendant 24h.

Après évaporation sous vide du solvant, le résidu est redissous dans du dichlorométhane. La phase organique est lavée à l'eau, séchée sur Na₂SO₄ anhydre, filtrée et concentrée sous vide. Le produit est purifié sur gel de silice (DCM/MeOH : 98/2) et est obtenu sous forme d'une huile jaune (31 mg soit 39% de rendement).

Le composé de formule I - B a été mis en solution, son activité redox a été testée par voltamétrie cyclique en utilisant un système à trois électrodes.

L'électrode de travail est une électrode de platine, l'électrode de référence est une électrode à calomel saturé et la contre-électrode est une électrode de platine.

L'électrolyte utilisé est une solution à 1M de Bu₄NPF₆ dans le carbonate de propylène.

La mesure de voltamétrie cyclique a été effectuée à une vitesse de balayage de 500 mV/s.

On identifie un pic d'oxydation à 0,448 V et un pic de réduction à 0,317 V.

On vérifie ainsi que la modification du ferrocène par le cyclooctyne ne détruit pas l'activité redox du ferrocène.

### Exemple 5 : Fonctionnalisation d'un support en silicium avec le composé de formule I - B

Dans cet exemple, il est démontré qu'il est possible de greffer directement le composé de formule I - B par chauffage sur une surface de silicium hydrogénée.

Ainsi, le composé de formule I - B a été greffé directement sur une surface de silicium hydrogénée de la façon suivante.

Une surface de silicium préalablement hydrogénée par traitement au HF 1% est introduite dans une solution à 1mM de cyclooctyne-ferrocène dans le mésitylène. Le milieu réactionnel est chauffée (100°C / 130°C / 180°C) sous atmosphère d'argon pendant 2 h. Après refroidissement à température ambiante, la surface est lavée et soniquée dans le dichlorométhane et séchée sous argon.

Les trois substrats obtenus ont été soumis à des mesures de voltamérie cyclique.

Les mesures de voltamétrie cyclique ont été effectuées en utilisant un système à trois électrodes : l'électrode de travail est le substrat de silicium étudié, l'électrode de référence est une électrode à calomel saturé et la contre-électrode est une électrode de platine. L'électrolyte utilisé est une solution à 1M de Bu₄NPF₆ dans le carbonate de propylène. Les mesures de voltamétrie cyclique ont été effectuées à des vitesses de balayage variant de 10 mV/s à 1000 mV/s.

On constate que dès que le greffage a lieu à 100 °C, on obtient un greffage efficace de la molécule qui permet d'observer l'activité redox du ferrocène sur la surface de silicium.

A 100 °C, et à une vitesse de balayage de 10 mV/s, le ΔE est de 111 mV.

A une vitesse de balayage de 50 mV/s, le ΔE est de 201 mV.

A une vitesse de balayage de 100 mV/s, le ΔE est de 262 mV.

Et à une vitesse de balayage de 500 mV/s, le ΔE est de 362 mV.

A 130 °C, et à une vitesse de balayage de 10 mV/s, le ΔE est de 91 mV.

A une vitesse de balayage de 500 mV/s, le ΔE est de 111 mV.

Et à une vitesse de balayage de 2000 mV/s, le ΔE est de 141 mV.

La densité de greffage, c'est-à-dire le nombre de molécules redox par unité de surface, a été évaluée par électrochimie à 3,9.10⁻¹¹ molécules.cm⁻² (à une vitesse de balayage de 500 mV/s).

Quant au greffage effectué à 180 °C, la mesure de voltamétrie cyclique à une vitesse de balayage de 100 mV/s montre que le ΔE(ox/red) est de 70 mV.

A une vitesse de balayage de 500 mV/s, le ΔE(ox/red) est de 121 mV.

A une vitesse de balayage de 1000 mV/s, le ΔE(ox/red) est de 151 mV.

Et à une vitesse de balayage de 2000 mV/s, le ΔE(ox/red) est de 181 mV.

Dans ce cas là, la densité de greffage a été évaluée par électrochimie à 1,0.10⁻¹¹ molécules.cm⁻² (à une vitesse de balayage de 500 mV/s).

Dans le cas du composé I-B, le bras espaceur entre le cyclooctyne et la molecule redox (ferrocène) est plus long. Ce facteur semble permettre un greffage plus efficace (par diminution de la gêne stérique) car le greffage est effectif dès 100°C. A cette température, le greffage semble toutefois moins efficace puisqu'on observe une plus importante réoxydation du substrat (ΔE(ox/red) plus grand). Au contraire, dès 130 °C, les résultats montrent (tant du point de vue des ΔE(ox/red) que de la densité de greffage) que le greffage est très performant. Dans ce cas-là, il semblerait donc qu'il y ait une activation thermique suffisante pour permettre le greffage et qu'il y ait une meilleure organisation de la couche formée due au bras espaceur plus long s'accompagnant d'une plus faible réoxydation du substrat.

## Revendications

1. Composés de formule générale I suivante : 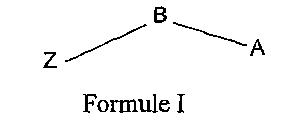 dans laquelle
- Z est un cycloalcyne ou un hétérocycloalcyne à au moins 8 chaînons, éventuellement substitué par un atome d'halogène ou un alkyle en C₁ à C₅ linéaire ou ramifié,
- A est une structure organique possédant des propriétés oxydo-réductrices, et
- B est un lien organique entre le cycle cycloalcyne ou l'hétérocycloalcyne et la structure organique A.

2. Composé selon la revendication 1 dans lequel Z est un cycloalcyne ou un hétérocycloalcyne ayant entre 8 à 12, inclus, chaînons.

3. Composé selon la revendication 1 ou 2 dans lequel Z est un cyclooctyne.

4. Composé selon l'une quelconque des revendications précédentes dans lequel A est choisi parmi une molécule de ferrocène, une molécule de porphyrine, une molécule d'anthracène, une molécule de naphtalène, une molécule de fullerène, une molécule de polyoxométallate.

5. Composé selon l'une quelconque des revendications précédentes dans lequel B est choisi parmi un alkyle en C₁ à C₃₀ inclus linéaire ou ramifié, saturé ou insaturé comportant éventuellement des hétéroatomes et/ou des fonctions amides et/ou esters, et un aryle en C₅ à C₆, un hétéroaryle en C₅ à C₆.

6. Composé de formule générale I selon l'une quelconque des revendications précédentes **caractérisé en ce que** le substituant -B-A est en position α de la triple liaison du cycloalcyne ou de l'hétérocycloalcyne.

7. Composé selon la revendication 1 **caractérisé en ce qu'**il a la formule I - A suivante :

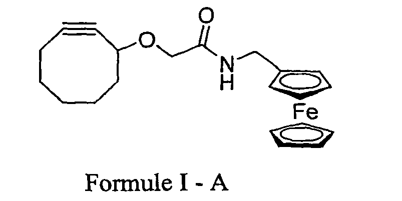

8. Composé selon la revendication 1 **caractérisé en ce qu'**il a la formule I - B suivante :

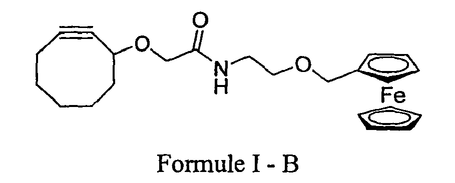

9. Utilisation d'au moins un composé de formule I selon l'une quelconque des revendications précédentes pour la fonctionnalisation d'un substrat inorganique.

10. Utilisation selon la revendication 9 **caractérisée en ce que** le substrat est en un matériau semi-conducteur.

11. Utilisation selon la revendication 9 ou 10 **caractérisée en ce que** le substrat est en silicium.

12. Système hybride de mémoire moléculaire **caractérisé en ce qu'**il comprend un substrat semi-conducteur fonctionnalisé avec au moins un composé de formule générale I selon l'une quelconque des revendications 1 à 6.

## Patentansprüche

1. Verbindungen der folgenden allgemeinen Formel I: 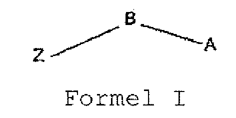 worin
- Z ein Cycloalkin oder ein Heterocycloalkin mit mindestens 8 Ringgliedern ist, das optional substituiert ist mit einem Halogenatom oder mit einer geradkettigen oder verzweigten C₁-C₅-Alkylgruppe,
- A eine organische Struktur ist, die Redoxeigenschaften aufweist und
- B eine organische Bildung zwischen dem Cycloalkin- oder Heterocycloalkinring und der organischen Struktur A ist.

2. Verbindung nach Anspruch 1, wobei Z ein Cycloalkin oder ein Heterocycloalkin mit 8 bis 12, einschließlich, Ringgliedern ist.

3. Verbindung nach Anspruch 1 oder 2, wobei Z ein Cyclooctin ist.

4. Verbindung nach einem der voranstehenden Ansprüche, wobei A ausgewählt ist aus einem Ferrocenmolekül, einem Porphyrinmolekül, einem Anthracenmolekül, einem Naphthalinmolekül, einem Fullerenmolekül, einem Polyoxymetallatmolekül.

5. Verbindung nach einem der voranstehenden Ansprüche, wobei B ausgewählt ist aus einer geradkettigen oder verzweigten, gesättigten oder ungesättigten C₁-C₃₀-Alkylgruppe, die optional Heteroatome und/oder Aminfunktionen und/oder Ester umfasst, und einer C₅-C₆-Arylgruppe, einer C₅-C₆-Heteroarylgruppe.

6. Verbindung der allgemeinen Formel I nach einem der voranstehenden Ansprüche, **dadurch gekennzeichnet, dass** sich der Substituent -B-A in der α-Position zu der Dreifachbindung des Cycloalkins oder des Heterocycloalkins befindet.

7. Verbindung nach Anspruch 1, **dadurch gekennzeichnet, dass** sie die folgende Formel I-A aufweist:

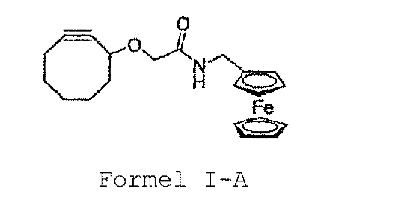

8. Verbindung nach Anspruch 1, **dadurch gekennzeichnet, dass** sie die folgende Formel I-B aufweist:

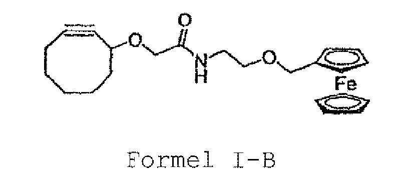

9. Verwendung mindestens einer Verbindung der Formel I nach einem der voranstehenden Ansprüche zur Funktionalisierung eines anorganischen Substrats.

10. Verwendung nach Anspruch 9, **dadurch gekennzeichnet, dass** das Substrat ein Halbleitermaterial ist.

11. Verwendung nach Anspruch 9 oder 10, **dadurch gekennzeichnet, dass** das Substrat aus Silicium ist.

12. Molekulares Hybridspeichersystem, **dadurch gekennzeichnet, dass** es ein Halbleitersubstrat umfasst, das mit mindestens einer Verbindung der allgemeinen Formel I nach einem der Ansprüche 1 bis 6 funktionalisiert ist.

## Claims

1. Compounds having the following general formula I: 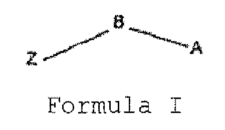 in which:
- Z is a cycloalkyne or a heterocycloalkyne having at least 8 links, optionally substituted by a halogen atom or a C₁ to C₅ alkyl, linear or branched,
- A is an organic structure having oxido-reducing properties, and
- B is an organic bond between the cycloalkyne cycle or the heterocycloalkyne and the organic structure A.

2. Compound according to claim 1 wherein Z is a cycloalkyne or a heterocycloalkyne having 8 to 12 links inclusive.

3. Compound according to claim 1 or 2 wherein Z is a cyclooctyne.

4. Compound according to any one of the preceding claims wherein A is chosen from a ferrocene molecule, a porphyrine molecule, an anthracene molecule, a naphthalene molecule, a fullerene molecule, a polyoxometallate molecule.

5. Compound according to any one of the preceding claims wherein B is chosen from a C₁ to C₃₀ inclusive alkyl, linear or branched, saturated or unsaturated, optionally including heteroatoms and/or amide and/or ester functions, and a C₅ to C₆ aryl, a C₅ to C₆ heteroaryl.

6. Compound according to any one of the preceding claims having the general formula I **characterized in that** the -B-A substituent is in the α position of the triple bond of the cycloalkyne or the heterocycloalkyne.

7. Compound according to claim 1 **characterized in that** it has the following formula I-A:

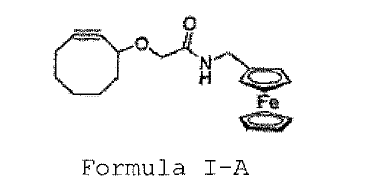

8. Compound according to claim 1 **characterized in that** it has the following formula I-B:

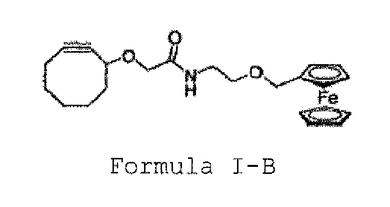

9. Use of at least one compound according to any one of the preceding claims having the formula I to functionalize an inorganic substrate.

10. Use according to claim 9 **characterized in that** the substrate is a semiconductor material.

11. Use according to claim 9 or 10 **characterized in that** the substrate is silicon.

12. Hybrid molecular memory system **characterized in that** it includes a semiconductor substrate functionalized by at least one compound according to any one of claims 1 to 6 having the general formula I.
